# EUROPÄISCHE PATENTANMELDUNG

(11) **EP 3 178 762 A1**
(43) Veröffentlichungstag der Anmeldung: **14.06.2017**
(21) Anmeldenummer: 16202561.3
(22) Anmeldetag: 07.12.2016
(51) Int. Cl.: B65G 37/00, B65G 41/00, B65G 47/53, B65G 47/54, B65G 15/10, B65G 15/12

(54) **FÖRDERVORRICHTUNG FÜR BACKWAREN**

(30) Priorität: 11.12.2015 DE 102015225025
(71) Anmelder: Schumann, Jörg, 35452 Heuchelheim (DE)
(72) Erfinder: Schumann, Jörg, 35452 Heuchelheim (DE)
(74) Vertreter: advotec.

(57) **Zusammenfassung**

Die Erfindung betrifft eine Fördervorrichtung (11) für Backwaren mit einer ersten, eine Zufördereinrichtung (13) aufweisenden Förderstrecke (17), einer zweiten, eine Querfördereinrichtung (14) aufweisenden Förderstrecke (25) und einer dritten, eine Rückfördereinrichtung (15) aufweisenden Förderstrecke (26), wobei die Zufördereinrichtung und die Rückfördereinrichtung als Längsfördereinrichtungen ausgebildet und parallel zueinander angeordnet sind und die Querfördereinrichtung ein Förderende (21) der ersten Förderstrecke (17) mit einem Förderanfang der dritten Förderstrecke (26) verbindet, derart, dass eine kontinuierliche Förderung zwischen einer an einem Förderanfang (16) der ersten Förderstrecke (17) angeordneten Backwarenaufgabe (18) und einer am Förderende der dritten Förderstrecke (26) angeordneten Backwarenausgabe (28) möglich ist, wobei die Backwarenaufgabe und die Backwarenausgabe auf derselben Bedienseite (19) der Fördervorrichtung angeordnet sind.

## Beschreibung

Die vorliegende Erfindung betrifft eine Fördervorrichtung für Backwaren mit einer ersten, eine Zufördereinrichtung aufweisenden Förderstrecke, einer zweiten, eine Querfördereinrichtung aufweisenden Förderstrecke und einer dritten, eine Rückfördereinrichtung aufweisenden Förderstrecke, wobei die Zufördereinrichtung und die Rückfördereinrichtung als Längsfördereinrichtungen ausgebildet und parallel zueinander angeordnet sind und die Querfördereinrichtung ein Förderende der ersten Förderstrecke mit einem Förderanfang der dritten Förderstrecke verbindet, derart, dass eine kontinuierliche Förderung zwischen einer am Förderanfang der ersten Förderstrecke angeordneten Backwarenaufgabe und einer am Förderende der dritten Förderstrecke angeordneten Backwarenausgabe möglich ist, wobei die Backwarenaufgabe und die Backwarenausgabe auf derselben Bedienseite der Fördervorrichtung angeordnet sind.

Fördervorrichtungen für Backwaren werden insbesondere bei der Applikation von Aprikoturen oder Glasuren der Backwaren eingesetzt, wobei die Backwaren unter der jeweils für die Aprikotur und die Glasur vorgesehenen Applikationseinrichtungen längsgefördert werden, so dass die Backwaren sequentiell mit der Aprikotur oder der Glasur versehen werden. Hierbei werden regelmäßig Längsfördereinrichtungen eingesetzt, an deren einem Ende die Aufgabe der Backwaren auf die Fördereinrichtung erfolgt und an deren anderem Ende die Backwaren der Fördereinrichtung entnommen werden.

Der wirtschaftliche Betrieb der bekannten Längsfördereinrichtungen setzt voraus, dass jeweils eine Person die Backwaren manuell auf die Längsfördereinrichtung aufgibt und eine weitere Person die mit der Aprikotur bzw. der Glasur versehenen Backwaren am anderen Ende der Längsfördereinrichtung entnimmt. Damit erweist sich der Betrieb der Längsfördereinrichtungen als entsprechend personalintensiv.

Der vorliegenden Erfindung liegt die Aufgabe zugrunde, eine Fördervorrichtung vorzuschlagen, die mit nur einer Person betrieben werden kann.

Zur Lösung dieser Aufgabe weist die Erfindung die Merkmale des Anspruchs 1 auf.

Die erfindungsgemäße Fördervorrichtung für Backwaren weist eine erste, eine Zufördereinrichtung aufweisende Förderstrecke, eine zweite, eine Querfördereinrichtung aufweisende Förderstrecke und eine dritte, eine Rückfördereinrichtung aufweisende Förderstrecke auf, wobei die Zufördereinrichtung und die Rückfördereinrichtung als Längsfördereinrichtungen ausgebildet und parallel zueinander angeordnet sind und die Querfördereinrichtung ein Förderende der ersten Förderstrecke mit einem Förderanfang der dritten Förderstrecke verbindet, derart, dass eine kontinuierliche Förderung zwischen einer an einem Förderanfang der ersten Förderstrecke angeordneten Backwarenaufgabe und einer am Förderende der dritten Förderstrecke angeordneten Backwarenausgabe möglich ist, wobei die Backwarenaufgabe und die Backwarenausgabe auf derselben Bedienseite der Fördervorrichtung angeordnet sind.

Da sich die Backwarenaufgabe und die Backwarenausgabe auf derselben Bedienseite der erfindungsgemäßen Fördervorrichtung befinden, wird zum Betrieb der Fördervorrichtung lediglich eine Person benötigt.

Vorzugsweise sind die Zufördereinrichtung, die Querfördereinrichtung und die Rückfördereinrichtung als Riemenförderer ausgebildet mit einer Mehrzahl von parallelen Riemensträngen, wobei Umlenkenden der Riemenstränge zur Ausbildung von Übergabebereichen zwischen der Zufördereinrichtung und der Querfördereinrichtung einerseits und der Querfördereinrichtung und der Rückfördereinrichtung andererseits versetzt zueinander angeordnet sind, derart, dass die in den Übergabebereichen benachbarten Umlenkenden längs der Winkelhalbierenden eines in den Übergabebereichen ausgebildeten Förderwinkels angeordnet sind.

Hierdurch wird zum einen sichergestellt, dass unabhängig von der Positionierung der Backwaren auf den Fördereinrichtungen eine kontinuierliche Förderung der Backwaren im Übergabebereich zwischen der Zufördereinrichtung und der Querfördereinrichtung einerseits und der Querfördereinrichtung und der Rückfördereinrichtung andererseits erfolgt. Darüber hinaus ermöglicht die Ausgestaltung der Fördereinrichtungen als Riemenförderer mit einzelnen Riemensträngen eine einfache Reinigung der Fördereinrichtungen von Aprikotur- oder Glasurrückständen.

Gemäß einer weiteren bevorzugten Ausführungsform werden die Querfördereinrichtung und die Zufördereinrichtung oder die Rückfördereinrichtung über einen gemeinsamen Antriebsmotor angetrieben, wobei zwischen dem Antriebsmotor und der Querfördereinrichtung ein Getriebe angeordnet ist, zur Reduzierung einer Fördergeschwindigkeit der Querfördereinrichtung gegenüber der Fördergeschwindigkeit der Zufördereinrichtung oder der Rückfördereinrichtung.

Die vergleichsweise Reduzierung der Fördergeschwindigkeit während des Transports der Backwaren auf der Querfördereinrichtung ermöglicht selbst bei einer gegenüber der Zufördereinrichtung oder der Rückfördereinrichtung verkürzten Förderstrecke der Querfördereinrichtung eine ausreichend lange Verweilzeit der Backwaren auf der Querfördereinrichtung, so dass zum Antrocknen einer während des Transports der Backwaren auf der Zufördereinrichtung auf die Backwaren aufgebrachte Aprikotur vor Übergabe der Backwaren auf die Rückfördereinrichtung, die mit einer Applikationseinrichtung zur Applikation einer Glasur versehen sein kann, eine ausreichend lange Trocknungsphase zur Verfügung steht.

Besonders vorzugsweise ist im Bereich der Backwarenausgabe benachbart einem Förderende der Rückfördereinrichtung eine Staustrecke zum Aufstauen von der Rückfördereinrichtung geförderten Backwaren ausgebildet, so dass die Entnahme der Backwaren von der Fördervorrichtung unabhängig von der Förderfrequenz der Backwaren auf der Fördereinrichtung erfolgen kann.

Wenn die Staustrecke als Rollenfeld mit einer Mehrzahl von parallel und quer zur Förderrichtung der Rückfördereinrichtung angeordneten antriebslosen Rollen gebildet ist, kann ein die Backwaren schonendes Aufstauen der Backwaren erfolgen.

Vorzugsweise sind die Zufördereinrichtung, die Querfördereinrichtung und die Rückfördereinrichtung in einem gemeinsamen Fördergestell angeordnet, das lösbar mit einem zumindest einen Antriebsmotor aufweisenden Untergestell verbunden ist, so dass nach Entfernung des Fördergestells vom Untergestell eine Reinigung der Fördervorrichtung unabhängig vom Untergestell erfolgen kann, und die Fördervorrichtung beispielsweise in eine Reinigungseinrichtung eingebracht werden kann.

Wenn das Fördergestell im Bereich der Zufördereinrichtung eine erste Aufnahmeeinrichtung zur Aufnahme einer ersten Applikationseinrichtung und das Fördergestell im Bereich der Rückfördereinrichtung eine zweite Aufnahmeeinrichtung zur Aufnahme einer zweiten Applikationseinrichtung aufweist, kann die Anordnung der Applikationseinrichtungen unabhängig vom Untergestell unmittelbar am Fördergestell selbst erfolgen.

Besonders bevorzugt ist es, wenn die erste Applikationseinrichtung lösbar mit der ersten Aufnahmeeinrichtung und die zweite Applikationseinrichtung lösbar mit der zweiten Aufnahmeeinrichtung verbunden ist, so dass die Applikationseinrichtungen modular mit dem Fördergestell verbunden werden können. Somit kann ein Betreiber der Fördervorrichtung bereits vorhandene Applikationseinrichtungen zum Betrieb der Fördervorrichtung mit dem Fördergestell kombinieren, so dass die Bereitstellung gesonderter Applikationseinrichtungen als Voraussetzung für den Einsatz der Fördervorrichtung bei der Herstellung von Backwaren entfällt.

Nachfolgend wird eine bevorzugte Ausführungsform der Fördervorrichtung anhand der Zeichnung näher erläutert.

Es zeigen:
- **Fig. 1**: eine schematische isometrische Darstellung der auf einem Untergestell angeordneten Fördervorrichtung;
- **Fig. 2**: eine Draufsicht auf die in **Fig. 1** dargestellte Fördervorrichtung.

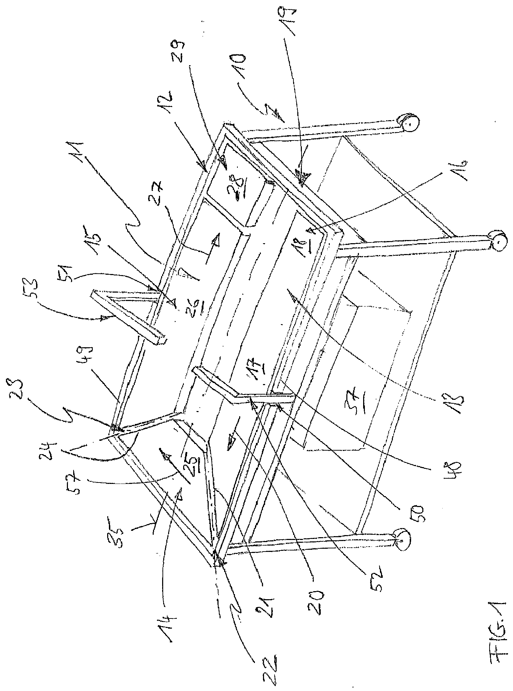

**Fig. 1** zeigt eine auf einem Untergestell 10 angeordnete Fördervorrichtung 11, die in einem Fördergestell 12 eine Zufördereinrichtung 13, eine Querfördereinrichtung 14 und eine Rückfördereinrichtung 15 aufweist.

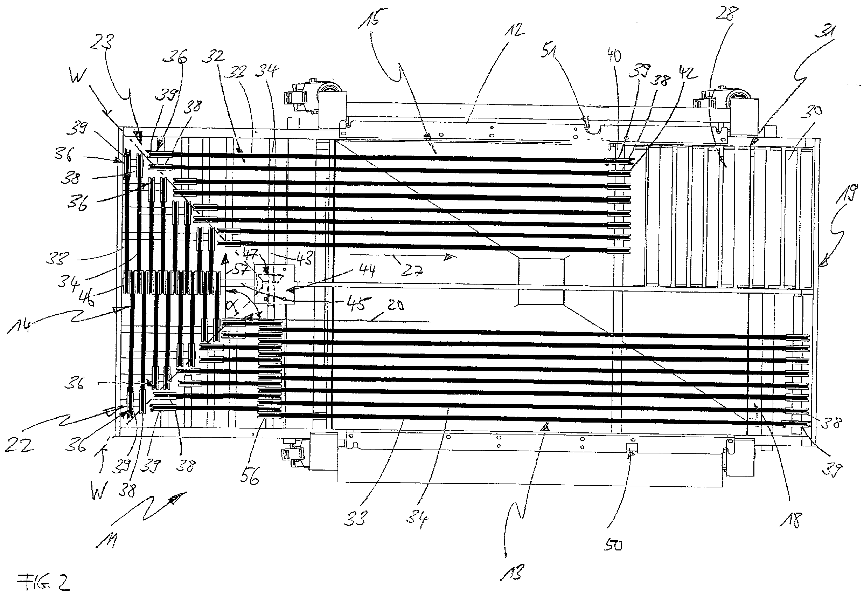

Wie insbesondere aus einer Zusammenschau der **Fig. 1** und **2** hervorgeht, ist an einem Förderanfang 16 einer die Zufördereinrichtung 13 aufweisenden ersten Förderstrecke 17 eine Backwarenaufgabe 18 ausgebildet, so dass hier nicht näher dargestellte Backwaren von einer an einer Bedienseite 19 befindlichen Person auf die Zufördereinrichtung 13 aufgegeben werden können. Die aufgegebenen Backwaren werden in Förderrichtung 20 in Längsrichtung 35 der Fördervorrichtung 11 zu einem an einem Förderende 21 der Förderstrecke 17 ausgebildeten Übergabebereich 22 gefördert, in dem die Backwaren auf die Querfördereinrichtung 14 übergeben werden. In Förderrichtung 57 der Querfördereinrichtung 14 werden die Backwaren bis zu einem weiteren Übergabebereich 23 an einem Förderende 24 einer die Querfördereinrichtung 14 aufweisenden zweiten Förderstrecke 25 auf die Rückfördereinrichtung 15 übergeben, die Bestandteil einer dritten Förderstrecke 26 ist, längs der eine zur Förderrichtung 20 entgegengesetzte Förderung in Förderrichtung 27 zu einer Backwarenausgabe 28 hin erfolgt. Die Backwarenausgabe 28 weist eine Staustrecke 29 am Ende der Förderstrecke 26 auf mit einem Rollenfeld 31 **(****Fig. 2****),** das aus einer Vielzahl parallel zueinander angeordneter Rollen 30 gebildet ist. Wie die **Fig. 1** und **2** zeigen, befindet sich sowohl die Backwaren-Aufgabe 18 als auch die Backwaren-Ausgabe 28 an der Bedienseite 19 der Fördervorrichtung 11.

Wie insbesondere der **Fig. 2** zu entnehmen ist, sind die Zufördereinrichtung 13, die Querfördereinrichtung 14 und die Rückfördereinrichtung 15 jeweils als Riemenförderer ausgebildet mit einer Mehrzahl parallel zueinander angeordneter Riemenstränge 32, die jeweils zwei parallel zueinander angeordnete Riemenanordnungen 33, 34 aufweisen, die an ihren Umlenkenden 36 jeweils über Riemenscheiben 38, 39 geführt sind.

In dem zwischen der Zufördereinrichtung 13 und der Querfördereinrichtung 14 ausgebildeten Übergabebereich 22 sowie ebenfalls in dem zwischen der Querfördereinrichtung 14 und der Rückfördereinrichtung 15 ausgebildeten Übergabebereich 23 sind die Umlenkenden 36 längs der Winkelhalbierenden W des zwischen der Förderrichtung 20 der Zufördereinrichtung 13 und der Förderrichtung 57 der Querförderrichtung 14 sowie zwischen der Förderrichtung 20 der Querfördereinrichtung 14 und der Förderrichtung 27 der Rückfördereinrichtung 15 ausgebildeten Förderwinkels α versetzt zueinander angeordnet.

Wie ferner aus **Fig. 2** zu ersehen ist, sind die Riemenscheiben 39 der benachbart einem Förderrahmen 41 des Fördergestells 12 angeordneten Riemenanordnungen 33 im Durchmesser größer ausgeführt, als die weiter innen liegenden Riemenscheiben 38 der Zufördereinrichtung 13, der Querfördereinrichtung 14 und der Rückfördereinrichtung 15, so dass die benachbart dem Förderrahmen 41 angeordnete Riemenanordnungen 33 vertikal oberhalb der Riemenanordnungen 34 angeordnet sind und eine äußere Anschlagbegrenzung für die auf der Zufördereinrichtung 13, der Querfördereinrichtung 14 und der Rückfördereinrichtung 15 geförderten Backwaren bilden und ein Herunterfallen der Backwaren vom Fördergestell 12 verhindern.

Wie weiterhin aus **Fig. 2** zu ersehen ist, erfolgt der Antrieb der Riemenanordnungen 33, 34 der Zufördereinrichtung 13 und der Querfördereinrichtung 14 über eine gemeinsame von einem ersten Antriebsmotor einer Antriebseinrichtung 37 angetriebene Antriebswelle 43, die durch ein Abzweiggetriebe 44 hindurchgeführt ist, derart, dass über das Abzweiggetriebe 44 der Antrieb von der Antriebswelle 43 auf eine Abzweigwelle 45 mit Riemenantriebsscheiben 46 zum Antrieb der Querfördereinrichtung 14 übertragen wird. Zur Reduzierung der Drehzahl der Abtriebswelle 45 gegenüber der Antriebswelle 43 ist das Abtriebsgetriebe 44 mit einer Kegelrandpaarung 47 versehen. Der Antrieb der Riemenanordnungen 33, 34 der Zufördereinrichtung 13 erfolgt über auf der Antriebswelle 43 angeordnete Riemenantriebsscheiben 56.

Zum Antrieb der Rückfördereinrichtung 15 weist die Antriebseinrichtung 37 einen zweiten Antriebsmotor auf, der eine Antriebswelle 40 antreibt, auf der Riemenantriebsscheiben 42 angeordnet sind.

Wie insbesondere in **Fig. 1** dargestellt ist, ist das Fördergestell 12 an Längsseitenteilen 48, 49 des Förderrahmens 41 mit Aufnahmeeinrichtungen 50, 51 versehen, die zur Aufnahme einer ersten Applikationseinrichtung 52 und einer zweiten Applikationseinrichtung 53 dienen, wobei die erste Applikationseinrichtung 52, die im Bereich der Zufördereinrichtung 13 angeordnet ist, vorzugsweise als Applikationseinrichtung zur Applikation einer Aprikotur auf längs der Zufördereinrichtung 13 geförderten Backwaren ausgebildet ist und die im Bereich der Rückfördereinrichtung 15 angeordnete Applikationseinrichtung 53 vorzugsweise als Applikationseinrichtung zur Aufbringung einer Glasur auf die längs der Rückfördereinrichtung 15 geförderten Backwaren ausgebildet ist.

Zur Reinigung der auf dem Untergestell 10 angeordneten Fördervorrichtung 11 kann diese nach mechanischer Entkopplung von der im Untergestell 10 aufgenommenen Antriebseinrichtung 37 vom Untergestell 10 abgenommen werden. Ebenfalls lösbar mit der Fördervorrichtung 11 verbunden sind die beiden Applikationseinrichtungen 52, 53, die vor einer Reinigung der Fördervorrichtung aus den Aufnahmeeinrichtungen 50, 51 entfernt werden können.

## Patentansprüche

1. Fördervorrichtung (11) für Backwaren mit einer ersten, eine Zufördereinrichtung (13) aufweisenden Förderstrecke (17), einer zweiten, eine Querfördereinrichtung (14) aufweisenden Förderstrecke (25) und einer dritten, eine Rückfördereinrichtung (15) aufweisenden Förderstrecke (26), wobei die Zufördereinrichtung und die Rückfördereinrichtung als Längsfördereinrichtungen ausgebildet und parallel zueinander angeordnet sind und die Querfördereinrichtung ein Förderende (21) der ersten Förderstrecke (17) mit einem Förderanfang der dritten Förderstrecke (26) verbindet, derart, dass eine kontinuierliche Förderung zwischen einer an einem Förderanfang (16) der ersten Förderstrecke (17) angeordneten Backwarenaufgabe (18) und einer am Förderende der dritten Förderstrecke (26) angeordneten Backwarenausgabe (28) möglich ist, wobei die Backwarenaufgabe und die Backwarenausgabe auf derselben Bedienseite (19) der Fördervorrichtung angeordnet sind.

2. Fördervorrichtung nach Anspruch 1,
**dadurch gekennzeichnet,**
**dass** die Zufördereinrichtung (13), die Querfördereinrichtung (14) und die Rückfördereinrichtung (15) als Riemenförderer ausgebildet sind mit einer Mehrzahl von parallelen Riemensträngen (32), wobei Umlenkenden (36) der Riemenstränge (32) zur Ausbildung von Übergabebereichen (22, 23) zwischen der Zufördereinrichtung (13) und der Querfördereinrichtung (14) einerseits und der Querfördereinrichtung (14) und der Rückfördereinrichtung (15) andererseits versetzt zueinander angeordnet sind, derart, dass die in den Übergabebereichen (22, 23) benachbarten Umlenkenden (36) längs der Winkelhalbierenden W eines in den Übergabebereichen ausgebildeten Förderwinkels α angeordnet sind.

3. Fördervorrichtung nach einem der vorangehenden Ansprüche,
**dadurch gekennzeichnet,**
**dass** die Querfördereinrichtung (14) und die Zufördereinrichtung (13) oder die Rückfördereinrichtung (15) über einen gemeinsamen Antriebsmotor angetrieben werden, wobei zwischen dem Antriebsmotor und der Querfördereinrichtung (14) ein Getriebe angeordnet ist, zur Reduzierung einer Fördergeschwindigkeit der Querfördereinrichtung (14) gegenüber der Fördergeschwindigkeit der Zufördereinrichtung (13) oder der Rückfördereinrichtung (15).

4. Fördervorrichtung nach einem der vorangehenden Ansprüche,
**dadurch gekennzeichnet,**
**dass** im Bereich der Backwarenausgabe (28) benachbart einem Förderende der Rückfördereinrichtung (15) eine Staustrecke (29) zum Aufstauen von der Rückfördereinrichtung geförderten Backwaren ausgebildet ist.

5. Fördervorrichtung nach Anspruch 4,
**dadurch gekennzeichnet,**
**dass** die Staustrecke (29) als Rollenfeld (31) mit einer Mehrzahl von parallel und quer zur Förderrichtung (27) der Rückfördereinrichtung (15) angeordneten antriebslosen Rollen (30) gebildet ist.

6. Fördervorrichtung nach einem der vorangehenden Ansprüche,
**dadurch gekennzeichnet,**
**dass** die Zufördereinrichtung (13), die Querfördereinrichtung (14) und die Rückfördereinrichtung (15) in einem gemeinsamen Fördergestell (12) angeordnet sind, das lösbar mit einem zumindest einen Antriebsmotor (55) aufweisenden Untergestell (10) verbunden ist.

7. Fördervorrichtung nach Anspruch 6,
**dadurch gekennzeichnet,**
**dass** das Fördergestell (12) im Bereich der Zufördereinrichtung (13) eine erste Aufnahmeeinrichtung (50) zur Aufnahme einer ersten Applikationseinrichtung (52) und das Fördergestell im Bereich der Rückfördereinrichtung (15) eine zweite Aufnahmeeinrichtung (51) zur Aufnahme einer zweiten Applikationseinrichtung (53) aufweist.

8. Fördervorrichtung nach Anspruch 7,
**dadurch gekennzeichnet,**
**dass** die erste Applikationseinrichtung (52) lösbar mit der ersten Aufnahmeeinrichtung (50) und die zweite Applikationseinrichtung (53) lösbar mit der zweiten Aufnahmeeinrichtung (51) verbunden ist.
